# EUROPÄISCHE PATENTSCHRIFT

(11) **EP 2 646 275 B1**
(45) Veröffentlichungstag und Bekanntmachung des Hinweises auf die Patenterteilung: **17.12.2014**
(21) Anmeldenummer: 11778922.2
(22) Anmeldetag: 07.11.2011
(51) Int. Cl.: B60L 11/18

(54) **VERFAHREN ZUM LADEN EINER TRAKTIONSBATTERIE**
METHOD FOR CHARGING A TRACTION BATTERY
PROCÉDÉ DE CHARGEMENT D'UNE BATTERIE DE TRACTION

(30) Priorität: 03.12.2010 DE 102010062376
(43) Veröffentlichungstag der Anmeldung: 09.10.2013
(73) Patentinhaber: ZF Friedrichshafen AG, 88038 Friedrichshafen (DE)
(72) Erfinder: JANUSCHEVSKI, Robert, 88069 Tettnang (DE); KETT, Jürgen, 68163 Mannheim (DE)
(86) Internationale Anmeldenummer: PCT/EP2011/069544
(87) Internationale Veröffentlichungsnummer: WO 2012/072378

(56) Entgegenhaltungen:
- WO-A1-2010/119460
- DE-A1- 4 107 391
- DE-A1-102008 063 465
- US-A- 5 485 064

## Beschreibung

Die vorliegende Erfindung betrifft ein Verfahren zum Laden einer Traktionsbatterie gemäß dem Oberbegriff von Anspruch 1.

Im Stand der Technik ist es bekannt, z.B. aus der Druckschrift DE 196 52 950 A1 oder der Druckschrift EP 0 849 112 A1, eine Traktionsbatterie mittels des bordeigenen Antriebssystems eines Kraftfahrzeugs an einer externen Wechselspannungs- bzw. Drehstromquelle zu laden. Hierbei wird der Wechselrichter des Antriebssystems als Hochsetzsteller in Richtung zur Batterie genutzt. Im Fall der Verwendung einer Asynchronmaschine als Antriebsaggregat steht diese - zur Vermeidung eines hohen Blindleistungsbedarfs - während des Ladevorgangs still und kann vorteilhaft dazu genutzt werden, die Netzspannung herabzusetzen, z.B. mittels geeigneter Wicklungsabgriffe, d.h., die Batterie nicht zu gefährden. Die kurzgeschlossene Rotorwicklung bzw. der Kurzschlussläufer der Asynchronmaschine wird mittels Schalter zum Laden der Batterie geöffnet. EP 1930203 und DE 19520603 offenbaren Verfahren zum Laden einer Traktionsbatterie eines Kraftfahrzeugs an einem externen Wechselstromnetz gemäss dem Stand der Technik.

Nachteilig bei den im Stand der Technik vorgeschlagenen Anordnungen ist, dass Schalter vorgesehen werden müssen, welche anlässlich des Ladens der Traktionsbatterie die sonst kurzgeschlossene Rotorwicklung unterbrechen. Derartige Leistungsschalter verursachen zusätzliche Kosten und Gewicht.

Ausgehend hiervon liegt der vorliegenden Erfindung die Aufgabe zugrunde, vorstehend geschilderte Nachteile des Standes der Technik zu überwinden und ein Verfahren zum Laden einer Traktionsbatterie vorzuschlagen, welches den Verzicht auf derartige Schalter ermöglicht.

Diese Aufgabe wird erfindungsgemäß durch die Merkmale des Anspruchs 1 gelöst.

Vorgeschlagen wird erfindungsgemäß ein Verfahren zum Laden einer Traktionsbatterie, insbesondere eines Kraftfahrzeugs, an einem externen Wechselstromnetz, insbesondere einem Drehstromnetz, wobei die zu ladende Traktionsbatterie via eines Wechselrichters mit einer elektrischen Wechselfeldmaschine gekoppelt ist, wobei das Wechselstromnetz an die Strangwicklungen der Wechselfeldmaschine schaltbar ist, wobei die Drehzahl der Wechselfeldmaschine in einem ersten Schritt mit der Netzfrequenz des Wechselstromnetzes synchronisiert wird; wobei in einem zweiten Schritt das Wechselstromnetz an die Strangwicklungen der Wechselfeldmaschine geschaltet und der mit der Wechselfeldmaschine elektrisch gekoppelte Wechselrichter als Hochsetzsteller betrieben wird. Die Strangwicklungen sind dabei insbesondere Speisestrangwicklungen der Wechselfeldmaschine.

Gemäß einem Aspekt des erfindungsgemäßen Verfahrens treibt der Wechselrichter die Wechselfeldmaschine im ersten Schritt zum Zwecke der Synchronisierung, insbesondere mittels der Traktionsbatterie, an bzw. speist diese.

Gemäß einem weiteren Aspekt des erfindungsgemäßen Verfahrens arbeitet der Wechselrichter im zweiten Schritt in Richtung hin zur Traktionsbatterie als Hochsetzsteller.

Gemäß noch einem weiteren Aspekt des erfindungsgemäßen Verfahrens wird die Wechselfeldmaschine vor dem ersten Schritt von einem Antriebsstrang, insbesondere eines Kraftfahrzeugs, getrennt, weiterhin insbesondere mittels einer Trennkupplung.

Vorgeschlagen wird erfindungsgemäß auch ein Verfahren, wobei die elektrische Wechselfeldmaschine nach dem ersten Schritt im Leerlauf betrieben wird.

Vorgeschlagen wird erfindungsgemäß weiterhin ein Verfahren, wobei die elektrische Wechselfeldmaschine als Asynchronmaschine ausgebildet ist, insbesondere mit Strangwicklungen in Dreieckschaltung.

Gemäß einem Aspekt des erfindungsgemäßen Verfahrens wird das Wechselstromnetz zu einem Synchronpunkt an die Strangwicklungen geschaltet, insbesondere mittels einer Synchronisiervorrichtung und/oder einer Anschaltvorrichtung.

Gemäß einem weiteren Aspekt des erfindungsgemäßen Verfahrens wird der Wechselrichter im zweiten Schritt, insbesondere mittels eines Wicklungsabgriffs an einer Strangwicklung, zumindest zeitweise mit einer gegenüber der Netzspannung herabgesetzten Spannung seitens der Wechselfeldmaschine gespeist.

Gemäß noch einem weiteren Aspekt des erfindungsgemäßen Verfahrens liegt der Scheitelwert der herabgesetzten Spannung unterhalb der Batteriespannung der Traktionsbatterie.

Vorgeschlagen wird erfindungsgemäß auch eine Vorrichtung zur Durchführung des erfindungsgemäßen Verfahrens, insbesondere zur Verwendung an einem Kraftfahrzeug.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Beispielhafte Ausführungsformen der Erfindung werden nachfolgend anhand der beigefügten Zeichnungen näher erläutert. Es zeigen:
- Fig. 1: exemplarisch eine Vorrichtung zur Durchführung des erfindungsgemäßen Verfahrens gemäß einer möglichen Ausführungsform der Erfindung; und
- Fig. 2: exemplarisch eine Vorrichtung zur Durchführung des erfindungsgemäßen Verfahrens gemäß einer weiteren möglichen Ausführungsform der Erfindung.

In den nachfolgenden Figurenbeschreibungen sind gleiche Elemente bzw. Funktionen mit gleichen Bezugszeichen versehen.

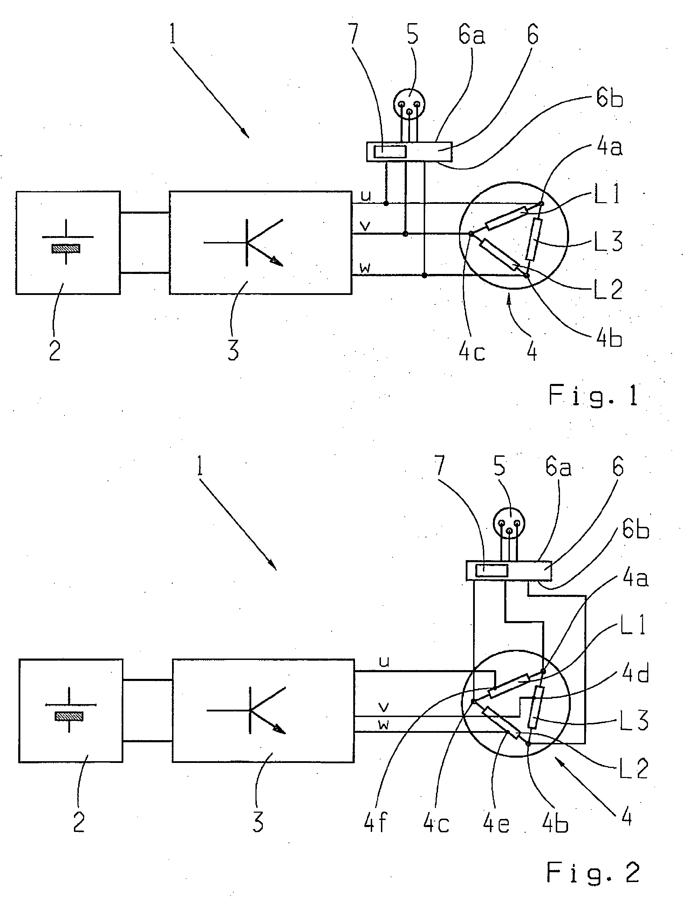

Fig. 1 und 2 zeigen exemplarisch je eine erfindungsgemäße Vorrichtung 1 zum Laden einer Batterie bzw. Traktionsbatterie 2, welche zur Durchführung des erfindungsgemäßen Verfahrens ausgebildet ist. Die Traktionsbatterie 2 ist hierbei insbesondere Bestandteil der Vorrichtung 1.

Die zu ladende Traktionsbatterie 2 ist z.B. als wiederaufladbare Batterie bzw. als Akkumulator gebildet, z.B. mittels einer oder mehreren Batteriezellen. Die die Traktionsbatterie 2 bildenden Batteriezellen können z.B. parallel oder in Reihe zusammengeschaltet sein, wobei sie z.B. einen gemeinsamen Ausgang aufweisen. Alternativ kann anstelle der Traktionsbatterie 2 erfindungsgemäß z.B. ein anderes Energiespeicherelement mittels der Vorrichtung 1 aufgeladen werden, z.B. ein SuperCap.

Die Traktionsbatterie 2 ist mittels bzw. via eines Wechselrichters 3 der Vorrichtung 1 mit einer elektrischen Wechselfeldmaschine 4 der Vorrichtung 1, insbesondere einer Drehfeldmaschine und weiterhin insbesondere mit einer Asynchronmaschine gekoppelt bzw. wirkverbunden. Eine Asynchronmaschine 4 ist insbesondere als Kurzschlussläufer-Asynchronmaschine 4 gebildet, vorzugsweise mit Käfigläufer.

Der Wechselrichter 3 ist insbesondere ein Pulswechselrichter und dazu vorgesehen, die elektrische Wechselfeldmaschine 4 zu Antriebszwecken geeignet zu speisen bzw. anzusteuern, z.B. mit PWM, und zu rekuperierende Energie seitens der elektrischen Wechselfeldmaschine 4 z.B. geeignet in die Traktionsbatterie 2 zurückzuspeisen. Der Wechselrichter 3, welcher insbesondere mit einer Steuerung (nicht dargestellt) zusammenwirkt, ist hierbei auf übliche Weise mittels mehrerer Brückenzweige gebildet, z.B. mittels einer B6-Brückenschaltung. In jedem Brückenzweig sind zwei Schalter, z.B. MOSFETs oder IGBTs, sowie je eine dem jeweiligen Schalter antiparallel zugeordnete Freilaufdiode angeordnet.

Der Wechselrichter 3 ist - über die Brückenmittelpunkte zwischen den Schaltern je eines Brückenzweigs - mit der Wechselfeldmaschine 4 elektrisch gekoppelt. Der Wechselrichter 3 ist hierzu mit den zur elektrischen Speisung der Wechselfeldmaschine 4 vorgesehenen Strangwicklungen L1, L2, L3 der Wechselfeldmaschine 4, welche insbesondere Strangwicklungen L1, L2, L3 des Stators derselben sind, elektrisch leitfähig verbunden bzw. verbindbar, i.e. wechselspannungsseitig. Die Strangwicklungen L1, L2, L3 sind hierbei insofern Speisestrangwicklungen, über welche eine Energieeinspeisung zum Betrieb bzw. Antrieb der Wechselfeldmaschine 4 vorgesehen ist.

Der Wechselrichter 3 ist insbesondere jeweils mit den Anschlussklemmen 4a, 4b, 4c der jeweiligen Strangwicklungen L1, L2, L3, Fig. 1, oder z.B. mit Wicklungsabgriffen 4c, 4d, 4e an jeweils den Strangwicklungen L1, L2, L3, Fig. 2, gekoppelt, z.B. über die Verbindungsleitungen u, v, w. Im Falle einer Asynchronmaschine 4 ist der Wechselrichter 3 insbesondere mit Strangwicklungen L1, L2, L3 in Dreieckschaltung gekoppelt, i.e. mit Statorwicklungen der Asynchronmaschine 4.

Im Rahmen der vorliegenden Erfindung sind die Traktionsbatterie 2, der Wechselrichter 3 sowie die elektrische Maschine 4 insbesondere jeweils Teil eines elektrischen Antriebssystems, z.B. eines hybridisierten Antriebsystems, insbesondere eines Kraftfahrzeugs.

Erfindungsgemäß ist die Vorrichtung 1 dazu vorgesehen, mit einem externen Wechselstromnetz, insbesondere einem Drehstromnetz, verbunden zu werden, um die Traktionsbatterie 2 zu laden. Ein solches Wechselstromnetz kann z.B. an einer Energieversorgungsvorrichtung 5, z.B. einer Ladesäule zur Verfügung gestellt sein, wobei eine solche Energieversorgungsvorrichtung 5 insbesondere stationär ein externes Wechselstromnetz bereitstellt, insbesondere ein Drehstromnetz. Die versorgbare Spannung des Wechselstromnetzes kann z.B. 230V oder z.B. 400V betragen.

Zur insbesondere erfindungsgemäßen Verbindung mit der stationären Energieversorgungsvorrichtung 5 bzw. dem an dieser zur Verfügung gestellten Wechselstromnetz weist die Vorrichtung 1 z.B. eine Schalt- bzw. Anschaltvorrichtung 6 auf, welche einen elektrischen Eingang 6a zur Verbindung mit der externen Energieversorgungsvorrichtung 6 bzw. dem externen Wechselstromnetz aufweist und welche ausgangsseitig, i.e. an einem elektrischen Ausgang 6b, elektrisch mit den Strangwicklungen L1, L2, L3 der Wechselfeldmaschine 4 gekoppelt bzw. koppelbar ist, i.e. elektrisch leitfähig verbunden bzw. verbindbar.

Die Anschaltvorrichtung 6 ermöglicht das selektive Unterbrechen der elektrischen Verbindung zwischen dem Eingang 6a derselben und dem Ausgang 6b, d.h. das Zuschalten des externen, mit dem Eingang 6a verbundenen Wechselstromnetzes an die Wechselfeldmaschine 4, i.e. an deren Strangwicklungen L1, L2, L3, und das Abschalten des Wechselstromnetzes von diesen. Das externe Wechselstromnetz wird bei einem Anschalten an die Strangwicklungen L1, L2, L3 insbesondere an die Anschlussklemmen 4a, 4b, 4c geschaltet, Fig. 1 und 2.

Die Anschaltvorrichtung 6 ist erfindungsgemäß insbesondere ebenfalls Bestandteil des Antriebssystems, kann jedoch auch z.B. getrennt von diesem gebildet sein. Schaltvorgänge werden durch die Anschaltvorrichtung 6 z.B. mittels wenigstens eines, insbesondere elektrisch angesteuerten, Schützes durchgeführt.

Bei dem erfindungsgemäßen Verfahren, welches mit oben stehender Vorrichtung 1 ausführbar ist, ist vorgesehen, die Drehzahl bzw. Frequenz der Wechselfeldmaschine 4 in einem ersten Schritt mit der Netzfrequenz des Wechselstromnetzes zu synchronisieren, i.e. die Wechselfeldmaschine 4 ist in Betrieb, der Rotor dreht. Hierzu wird die Wechselfeldmaschine 4 mittels des Wechselrichters 3 geeignet angesteuert, z.B. mit PWM.

Zum Zwecke der Synchronisierung werden, z.B. mittels einer Synchronisiervorrichtung 7 in z.B. Form eines Parallelschaltgeräts, z.B. der Anschaltvorrichtung 6, verschiedene Parameter des Wechselstromnetzes und der Wechselfeldmaschine 4 erfasst und miteinander verglichen, i.e. zumindest Netzfrequenz des Wechselstromnetzes und Drehzahl bzw. Frequenz der Wechselfeldmaschine 4 bzw. des Rotors derselben. Die Speisung der Wechselfeldmaschine 4 erfolgt während der Synchronisierung mittels einer Traktionsbatterie 2, insbesondere der zu ladenden Traktionsbatterie 2.

Durch die Synchronisierung der Wechselfeldmaschine 4 mit der Netzfrequenz des Wechselstromnetzes bzw. Drehstromnetzes, welcher insbesondere jeweils eine Trennung der Wechselfeldmaschine 4 von einem Antriebsstrang z.B. eines Kraftfahrzeugs, z.B. mittels einer Trennkupplung, vorausgeht, kann die Wechselfeldmaschine 4 bei Anschaltung bzw. Zuschaltung des Wechselstromnetzes an deren Strangwicklungen L1, L2, L3, i.e. mit Beginn des erfindungsgemäßen zweiten Schritts, nachfolgend drehmomentfrei, i.e. im Leerlauf mittels des externen Wechselstromnetzes betrieben werden. Dadurch, dass die Wechselfeldmaschine 4 erfindungsgemäß mit Netzfrequenz, z.B. 50Hz, synchron dreht kann der Blindleistungsbedarf der Wechselfeldmaschine 4 ferner auf einem niedrigen bzw. minimalen Niveau gehalten werden, insbesondere während oder für die Dauer eines Ladens der Traktionsbatterie 2 im zweiten Schritt.

Die Anschaltung des Wechselstromnetzes an die Strangwicklungen L1, L2, L3 entsprechend einem erfindungsgemäßen zweiten Schritt erfolgt vorzugsweise in einem Synchronpunkt, d.h. zu einem Zeitpunkt, in welchem die verglichenen Parameter der Wechselfeldmaschine 4 und des Wechselstromnetzes mit der gewünschten Übereinstimmung eingestellt sind. Zu insbesondere dem Synchronpunkt bzw. bei erfolgter Synchronisierung der Drehzahl der Wechselfeldmaschine 4 und der Netzfrequenz wird das externe Wechselstromnetz an die Wechselfeldmaschine 4 geschaltet, z.B. parallel, Fig. 1, insbesondere dadurch, dass die Schaltvorrichtung 6 durchschaltet, i.e. Ausgang 6b und Eingang 6a derselben elektrisch leitfähig verbunden sind.

Nach Anschaltung der Wechselfeldmaschine 4 an das externe Wechselstromnetz arbeitet der Wechselrichter 3 nunmehr erfindungsgemäß als Hochsetzsteller, i.e. in Richtung zur Traktionsbatterie. Ein Wechsel in die Hochsetzsteller-Betriebsart wird hierbei von der Steuerung veranlasst, welche insbesondere mit der Anschaltvorrichtung 6 zusammenwirkt.

Erfindungsgemäß ist auch vorgesehen, die externe Netzspannung zur Vermeidung einer Schädigung der Traktionsbatterie 2 herabsetzen zu können bzw. herabzusetzen, i.e. den Wechselrichter 3 seitens der Wechselfeldmaschine 4 bei einem Laden der Traktionsbatterie 2 mit einer gegenüber der externen Netzspannung niedrigeren Wechselspannung zu versorgen, wobei die Wechselspannung des Wechselstromnetzes auf einen Scheitelwert unterhalb der Traktionsbatteriespannung herunter transformiert wird.

Hierzu werden vorteilhaft die Strangwicklungen L1, L2, L3 der Wechselfeldmaschine 4, welche insbesondere statorseitige Strangwicklungen einer Asynchronmaschine 4 sind, genutzt. Z.B. wird vorteilhaft der Wechselrichter 3 mit Anzapfungen bzw. Wicklungsabgriffen 4d, 4e, 4f an den Strangwicklungen L1, L2, L3 verbunden bzw. elektrisch gekoppelt, i.e. mit je einem Wicklungsabgriff 4d, 4e, 4f je Strangwicklung L1, L2, L3. Hierbei wirkt die Wechselfeldmaschine 4 als Spartransformator, Fig. 2. Eine vorteilhafte Glättung der Netzströme kann hierbei durch die Streuinduktivitäten erreicht werden.

Derart kann der Wechselrichter 3 im zweiten Schritt mit einer gegenüber der Wechselstromnetzspannung herabgesetzten Spannung seitens der Wechselfeldmaschine 4 gespeist bzw. versorgt werden, wobei eine Spannungsherabsetzung zumindest zeitweise vorgesehen ist. Eine Spannungsherabsetzung kann alternativ z.B. auch mittels zweiter galvanisch getrennter Statorwicklungen erfolgen, wobei die Spannungsherabsetzung über das Wicklungsverhältnis erfolgt.

Bei dem erfindungsgemäßen Verfahren stützt die sich synchronisiert mitdrehende Wechselfeldmaschine 4 "quasi generatorisch" vorteilhaft das externe Wechselstromnetz im Hochsetzstellerbetrieb des Wechselrichters 3. Dies ermöglicht einen stabilen und schnellen Ladevorgang der Traktionsbatterie 2. Schalter wie im Stand der Technik sind entbehrlich.

### Bezugszeichen

- 1: Vorrichtung zum Laden einer Traktionsbatterie
- 2: Traktionsbatterie
- 3: Wechselrichter
- 4: Wechselfeldmaschine
- 4a, b, c: Anschluss Strangwicklung
- 4d, e, f: Wicklungsabgriff
- 5: externe Energieversorgungsvorrichtung
- 6: Anschaltvorrichtung
- 6a: Eingang 6
- 6b: Ausgang 6
- 7: Synchronisiervorrichtung
- u, v, w: Verbindungsleitungen
- L1, L2, L3: Strangwicklung

## Patentansprüche

1. Verfahren zum Laden einer Traktionsbatterie (2), insbesondere eines Kraftfahrzeugs, an einem externen Wechselstromnetz, insbesondere einem Drehstromnetz, wobei die zu ladende Traktionsbatterie (2) via eines Wechselrichters (3) mit einer elektrischen Wechselfeldmaschine (4) gekoppelt ist, wobei das Wechselstromnetz an die Strangwicklungen (L1, L2, L3) der Wechselfeldmaschine (4) schaltbar ist, **dadurch gekennzeichnet, dass** die Drehzahl der Wechselfeldmaschine (4) in einem ersten Schritt mit der Netzfrequenz des Wechselstromnetzes synchronisiert wird; in einem zweiten Schritt das Wechselstromnetz an die Strangwicklungen (L1, L2, L3) der Wechselfeldmaschine (4) geschaltet und der mit der Wechselfeldmaschine (4) elektrisch gekoppelte Wechselrichter (3) als Hochsetzsteller betrieben wird.

2. Verfahren nach Anspruch 1, **dadurch gekennzeichnet, dass** der Wechselrichter (3) die Wechselfeldmaschine (4) im ersten Schritt zum Zwecke der Synchronisierung, insbesondere mittels der Traktionsbatterie (2), antreibt bzw. speist.

3. Verfahren nach einem der vorhergehenden Ansprüche, **dadurch gekennzeichnet, dass** der Wechselrichter (3) im zweiten Schritt in Richtung hin zur Traktionsbatterie (2) als Hochsetzsteller arbeitet.

4. Verfahren nach einem der vorhergehenden Ansprüche, **dadurch gekennzeichnet, dass** die Wechselfeldmaschine (4) vor dem ersten Schritt von einem Antriebsstrang, insbesondere eines Kraftfahrzeugs, getrennt wird, weiterhin insbesondere mittels einer Trennkupplung.

5. Verfahren nach einem der vorhergehenden Ansprüche, **dadurch gekennzeichnet, dass** die Wechselfeldmaschine (4) nach dem ersten Schritt im Leerlauf betrieben wird.

6. Verfahren nach einem der vorhergehenden Ansprüche, **dadurch gekennzeichnet, dass** die Wechselfeldmaschine (4) als Asynchronmaschine ausgebildet ist, insbesondere mit Strangwicklungen (L1, L2, L3) in Dreieckschaltung.

7. Verfahren nach einem der vorhergehenden Ansprüche, **dadurch gekennzeichnet, dass** das Wechselstromnetz zu einem Synchronpunkt an die Strangwicklungen (L1, L2, L3) geschaltet wird, insbesondere mittels einer Synchronisiervorrichtung (7) und/oder einer Anschaltvorrichtung (6).

8. Verfahren nach einem der vorhergehenden Ansprüche, **dadurch gekennzeichnet, dass** der Wechselrichter (3) im zweiten Schritt, insbesondere mittels eines Wicklungsabgriffs (4d, 4e, 4f) an einer Strangwicklung (L1, L2, L3), zumindest zeitweise mit einer gegenüber der Netzspannung herabgesetzten Spannung seitens der Wechselfeldmaschine (4) gespeist wird.

9. Verfahren nach Anspruch 8, **dadurch gekennzeichnet, dass** der Scheitelwert der herabgesetzten Spannung unterhalb der Batteriespannung der Traktionsbatterie (2) liegt.

10. Vorrichtung zur Durchführung des Verfahrens nach einem der vorhergehenden Ansprüche.

## Claims

1. Method for charging a traction battery (2), in particular of a motor vehicle, from an external AC power supply system, in particular a three-phase power supply system, wherein the traction battery (2) which is to be charged is coupled to an electrical alternating field machine (4) via an inverter (3), wherein the AC power supply system can be connected to the phase windings (L1, L2, L3) of the alternating field machine (4), **characterized in that** the rotation speed of the alternating field machine (4) is synchronized with the power supply system frequency of the AC power supply system in a first step; the AC power supply system is connected to the phase windings (L1, L2, L3) of the alternating field machine (4) and the inverter (3) which is electrically coupled to the alternating field machine (4) is operated as a step-up actuator in a second step.

2. Method according to Claim 1, **characterized in that** the inverter (3) drives or feeds the alternating field machine (4), in particular by means of the traction battery (2), for the purpose of synchronization in the first step.

3. Method according to either of the preceding claims, **characterized in that** the inverter (3) operates in the direction of the traction battery (2) as a step-up actuator in the second step.

4. Method according to one of the preceding claims, **characterized in that** the alternating field machine (4) is disconnected from a drive train, in particular of a motor vehicle, before the first step, furthermore in particular by means of a disconnection clutch.

5. Method according to one of the preceding claims, **characterized in that** the alternating field machine (4) is operated at no-load after the first step.

6. Method according to one of the preceding claims, **characterized in that** the alternating field machine (4) is in the form of an asynchronous machine, in particular having phase windings (L1, L2, L3) which are connected in delta.

7. Method according to one of the preceding claims, **characterized in that** the AC power supply system is connected to the phase windings (L1, L2, L3) so as to form a synchronization point, in particular by means of a synchronization apparatus (7) and/or a connection apparatus (6).

8. Method according to one of the preceding claims, **characterized in that** the inverter (3) is at least temporarily fed by the alternating field machine (4) with a voltage which is reduced compared to the power supply system voltage, in particular by means of a winding tap (4d, 4e, 4f) from a phase winding (L1, L2, L3), in the second step.

9. Method according to Claim 8, **characterized in that** the peak value of the reduced voltage is below the battery voltage of the traction battery (2).

10. Apparatus for carrying out the method according to one of the preceding claims.

## Revendications

1. Procédé de chargement d'une batterie de traction (2), notamment d'un véhicule automobile, à un réseau de courant alternatif externe, notamment un réseau de courant triphasé, la batterie de traction (2) à charger étant couplée à un moteur à champ électrique alternatif (4) via un ondulateur (3), le réseau de courant alternatif pouvant être connecté aux enroulements à phase (L1, L2, L3) du moteur à champ alternatif (4), **caractérisé en ce que** la vitesse de rotation du moteur à champ alternatif (4) est synchronisée lors d'une première étape à la fréquence de réseau du réseau de courant alternatif ; lors d'une deuxième étape, le réseau de courant alternatif est connecté aux enroulements à phase (L1, L2, L3) du moteur à champ alternatif (4) et l'ondulateur (3) couplé électriquement au moteur à champ alternatif (4) est entraîné sous la forme d'un convertisseur élévateur.

2. Procédé selon la revendication 1, **caractérisé en ce que** l'ondulateur (3) entraîne et/ou alimente le moteur à champ alternatif (4) lors de la première étape pour réaliser la synchronisation, notamment à l'aide de la batterie de traction (2).

3. Procédé selon l'une quelconque des revendications précédentes, **caractérisé en ce que** l'ondulateur (3) sert de convertisseur en direction de la batterie de traction (2) lors de la deuxième étape.

4. Procédé selon l'une quelconque des revendications précédentes, **caractérisé en ce que** le moteur à champ alternatif (4) est séparé avant la première étape d'une chaîne cinématique, notamment d'un véhicule automobile, en outre notamment à l'aide d'un embrayage de coupure.

5. Procédé selon l'une quelconque des revendications précédentes, **caractérisé en ce que** le moteur à champ alternatif (4) est entraîné à vide après la première étape.

6. Procédé selon l'une quelconque des revendications précédentes, **caractérisé en ce que** le moteur à champ alternatif (4) prend la forme d'un moteur asynchrone, notamment doté d'enroulements à phase (L1, L2, L3) couplés en triangle.

7. Procédé selon l'une quelconque des revendications précédentes, **caractérisé en ce que** le réseau de courant alternatif est connecté à un point synchrone au niveau des enroulements à phase (L1, L2, L3), notamment à l'aide d'un dispositif de synchronisation (7) et/ou d'un dispositif de sélection (6).

8. Procédé selon l'une quelconque des revendications précédentes, **caractérisé en ce que** l'ondulateur (3) est alimenté à la deuxième étape au moins temporairement avec une tension abaissée par rapport à la tension de réseau, du côté du moteur à champ alternatif (4), notamment à l'aide d'une prise de tension d'enroulement (4d, 4e, 4f) placée au niveau d'un enroulement à phase (L1, L2, L3).

9. Procédé selon la revendication 8, **caractérisé en ce que** la valeur de crête de la tension abaissée se situe en dessous de la tension de batterie de la batterie de traction (2).

10. Dispositif de mise en oeuvre du procédé selon l'une quelconque des revendications précédentes.
